# EUROPEAN PATENT SPECIFICATION

(11) **EP 2 025 154 B1**
(45) Date of publication and mention of the grant of the patent: **20.04.2016**
(21) Application number: 06814764.4
(22) Date of filing: 15.09.2006
(51) Int. Cl.: H04N 5/76

(54) **METHOD AND APPARATUS FOR MAXIMIZING "LAST MILE" BANDWIDTH THROUGH NON-REAL-TIME PERSONAL VIDEO RECORDER (PVR) TRANSMISSION IN INTERNET PROTOCOL TELEVISION (IPTV) SYSTEMS**
VERFAHREN UND VORRICHTUNG ZUR MAXIMIERUNG DER LAST-MILE-BANDBREITE DURCH EINE NICHT ECHTZEIT ERFOLGENDE ÜBERTRAGUNG EINES PVR (PERSONAL VIDEO RECORDER) IN SYSTEMEN FÜR INTERNET-PROTOKOLL-FERNSEHEN (IPTV)
PROCEDE ET APPAREIL DE MAXIMISATION DE BANDE PASSANTE DERNIER KILOMETRE PAR UNE TRANSMISSION DIFFEREE D'UN MAGNETOSCOPE PERSONNEL (PVR) DANS DES SYSTEMES DE TELEVISION SUR IP (IPTV)

(30) Priority: 19.05.2006 US 801643 P
(43) Date of publication of application: 18.02.2009
(73) Proprietor: Nokia Solutions and Networks GmbH & Co. KG, 81541 Munich (DE)
(72) Inventor: KISPERT, Andrew, V., Kirkland, Washington 98033 (US)
(74) Representative: Weidel, Gottfried
(86) International application number: PCT/US2006/036080
(87) International publication number: WO 2007/136399

(56) References cited:
- EP-A- 1 376 299

## Description

### BACKGROUND OF THE INVENTION

### Field of the Invention

This invention relates to Internet Protocol television (IPTV) systems. More particularly, the invention relates to systems and methods for recording programs using a personal video recorder (PVR) in an IPTV system.

### Description of the Related Art

**Functionality with respect to client-side caching of streaming media content is described in the publication** EP-A-1 376 299 (MICROSOFT CORPORATION) 2 January 2004 (2004-01-02**), including functionality with respect to streaming media content at a rate independent of the encoded bit rate of the content, allowing streaming of content to continue even, when the user has selected various shuttle control options (e.g. pause, stop, fast forward, seek, rewind, etc.), allowing streaming content to be recorded for playback at a later time, and allowing streaming content to be time-shifted.** Most IPTV systems today that offer personal video recorder (PVR) functions stream content in real-time for either recording or viewing directly from a head-end encoder to subscribers' set-top boxes. The types of PVR offered today are usually client-side PVR (cPVR) or network-based PVR (nPVR) where each type of PVR service receives content streamed in real-time for recording. The main difference is where the content is stored.

In nPVR systems, the multimedia content is streamed in real-time from an nPVR server in order to be viewed by a subscriber. One advantage cPVR has over nPVR is that the content does not have to be streamed over a network connection in order to be watched at a later time, thus alleviating the impact on network connections. One disadvantage of cPVR over nPVR is that recording of content being streamed in real-time (at a rate necessary for viewing) has an impact on the available bandwidth being used for other applications. That is, the same amount of bandwidth is required for recording as viewing.

### SUMMARY OF THE INVENTION

A system according to embodiments of the present invention provides a PVR apparatus that enables recording of multi-media content (for viewing at a later time) in non-real-time, thus alleviating the impact on 'last mile' bandwidth and permitting the simultaneous recording of multiple multi-media streams.

Embodiments of the present invention thus allow the amount of bandwidth utilized for recording a multi-media stream to be dynamically selected ahead of time based on subscriber preferences. For example, a subscriber may choose to record a sporting event that occurs in the middle of his work day and plan to watch it in the evening. In this scenario, the subscriber may have the sporting event streamed for recording at a rate taking longer (e.g., up to several hours longer) than the duration of the actual event utilizing less 'last mile' bandwidth for the purposes of transporting the multi-media content.

A method according to an embodiment of the present invention includes selecting a television program to record at a user device; receiving a bit stream corresponding to the television program at a first bit rate at a server; and receiving a bit stream corresponding to the television program at the user device from the server at a second bit rate less than the first bit rate.

A system, according to an embodiment of the present invention, includes a head-end encoder configured to stream a television program to an intermediate server operably coupled to the head end encoder at a first bit rate; and a user device operably coupled to the intermediate server; wherein the intermediate server is configured to selectively stream the television program to the user device at less than the first bit rate.

A program product stored on one or more computer readable devices according to an embodiment of the present invention includes code executable to cause selecting a television program to record at a user device; code executable to cause receiving a bit stream corresponding to the television program at a first bit rate at a server; and code executable to cause receiving a bit stream corresponding to the television program at the user device from the server at a second bit rate less than the first bit rate.

### BRIEF DESCRIPTION OF THE DRAWINGS

The present invention may be better understood, and its numerous objects, features, and advantages made apparent to those skilled in the art by referencing the accompanying drawings. The use of the same reference symbols in different drawings indicates similar or identical items.
FIG. 1 illustrates an exemplary system according to an embodiment of the present invention..
FIG. 2 illustrates an exemplary user interface for use with a system in accordance with embodiments of the present invention.
FIG. 3 is a flowchart illustrating operation of an embodiment of the present invention.
FIG. 4 is a signaling diagram illustrating operation of an embodiment of the present invention.
FIG. 5 is a diagram illustrating operation of an embodiment of the present invention.
FIG. 6A-FIG. 6B illustrate an exemplary media distribution system that may be used in with a personal video recorder system according to embodiments of the present invention.
FIG. 7A- FIG. 7B is a diagrammatic representation of a user station and system that may be used to implement methods according to embodiments of the present invention.

### DETAILED DESCRIPTION OF EMBODIMENTS OF THE INVENTION

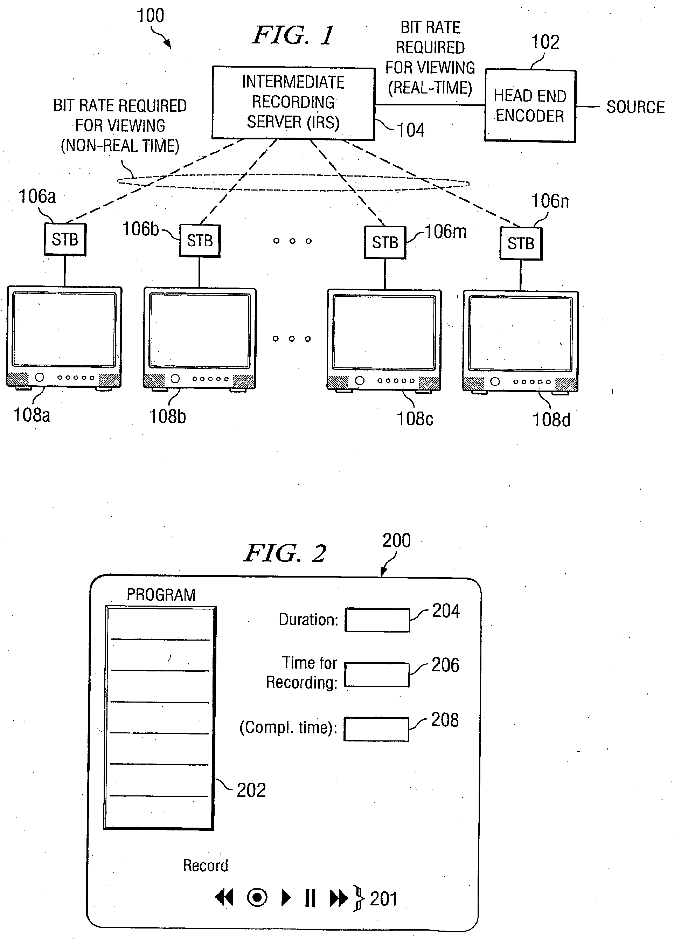

Turning now to the drawings and, with particular attention to FIG. 1, a diagram of a media delivery and personal video recorder (PVR) system in accordance with embodiments of the present invention and generally identified with the reference numeral 100.

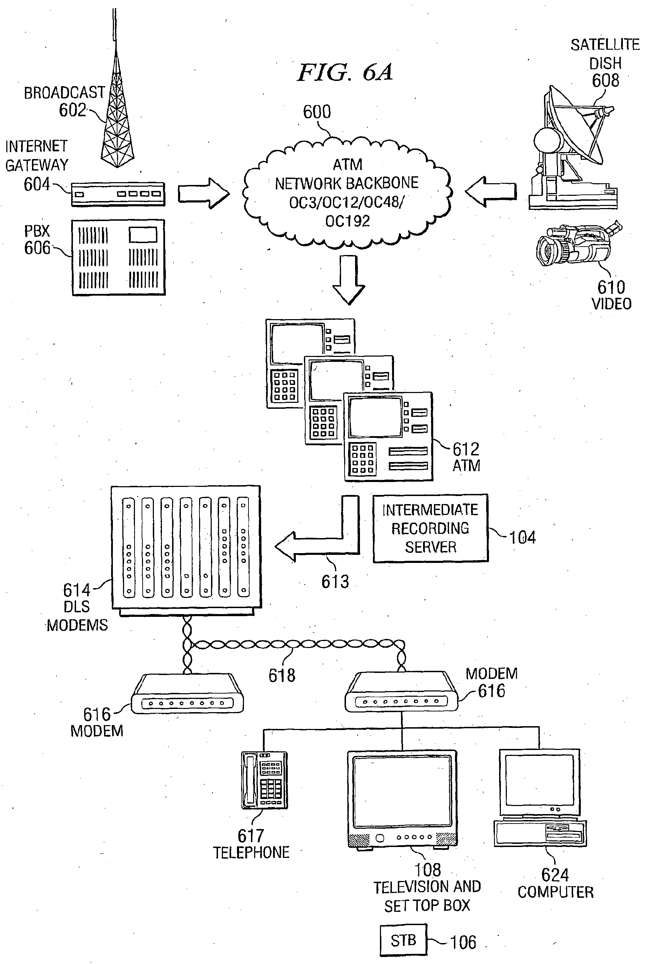

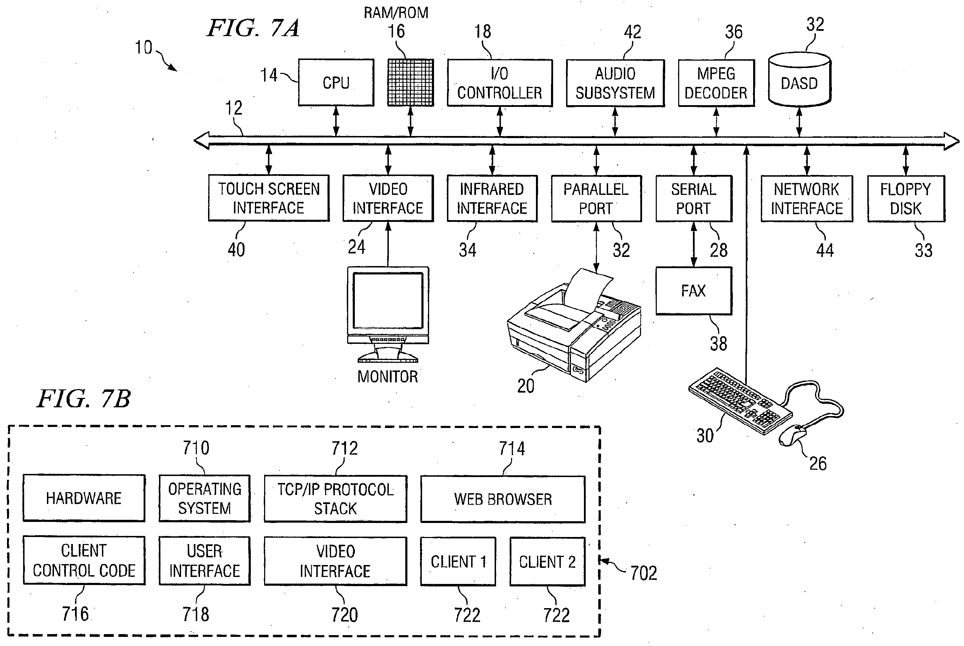

The system 100 includes a head end encoder 102, which may receive, e.g., television content and encode it for delivery on, e.g., a packet switched Internet Protocol (IP) network. The head end encoder 102 may be embodied in or part of a content server (not shown) that can provide content to one or more user devices. Such content can include, for example, video broadcasts such as single-channel or multi-channel television programming, single-channel or multi-channel audio broadcasts, audio-on-demand, video-on-demand, Internet-based content, voice over IP, etc. A media distribution system that may be used in association with a personal video recorder system in accordance with embodiments of the present invention will be described in greater detail below with reference to FIG. 6A-6B and FIG. 7A-7B.

The user devices may be embodied as one or more set top boxes (STB) 106a-106n. The STB's 106a-106n may be coupled to or in communication with one or more televisions 108a-108n for viewing or receiving the content. Thus, the STBs 106a-106n may each include a user interface component (not shown) that can provide or modify content being provided to the television associated with the STB (e.g., to display a menu of services or to select one or multiple channels from content provided by a third party). The STBs 106a-106n may further include personal video recorder functionality and memory for storing and playing back program content, as will be explained in greater detail below. In addition, in some embodiments, the STBs 106a-106n are connected to or in communication with one or more switched telephone network central offices (not shown) via, e.g., one or more DSL (digital subscriber line) lines. In such embodiments, packet-switched IP data routing is used to provide information about viewer interactions (e.g., content selection and other content viewing interactions), such as for viewers that are subscribers of a service providing various types of content and content-related services. In some embodiments, the media streams provided to and from the IRS 104 are implemented using the MPEG-2 standard.

Also shown in FIG. 1 is an intermediate recording server (IRS) 104. As will be explained in greater detail below, the IRS 104 includes memory for recording programming, and is able to stream content to the STBs 106a-106n at variable bit rates. The IRS 104 receives requests to record programming from the STBs 106a-106n. The requests include program identification, as well as an identification of a time period over which the recording should take place. The programming is then transmitted at the scheduled time by the head end encoder 102 to the IRS 104. The IRS 104 stores the program in memory (not shown). The program is then streamed to the requesting STB 106a-106n for storage at the less-than real-time rate and time period specified. Thus, as will be explained in greater detail below, the programming from the head end encoder 102 to the IRS 104 may be streamed in real time. The transmission to the STB 106a-106n will be done at less than real time. Embodiments of the present invention thus allow a user to increase the number of programs he can record at a given time, thereby maximizing "last mile" bandwidth.

As noted above, the STBs 106a-106n may each include a user interface, for interacting with a service provider. An exemplary graphical user interface 200 that a viewer may employ to interact with personal video recording services according to embodiments of the present invention is shown in FIG. 2. The user interface includes one or more standard video recorder type tools 201, such as PLAY, RECORD, PAUSE, FAST FORWARD or REVERSE, etc. In addition, the GUI 200 includes a program listing 202, and may include a duration entry 204, a time for recording entry 206, and a completion time 208.

In operation, the viewer can use a pointing device such as an infrared remote in conjunction with the GUI 200 to select a program for recording (e.g., while viewing another program or at a future date) and can set a period or duration that the recording should take place (e.g., a specific number of minutes or hours or a multiple of a real-time duration). According to some embodiments, the user could also set a time the recording to the STB 106 is to occur, or a "no later than" completion time the recording to the STB should be finished. In addition, in some embodiments, the end user may be able to make adjustments to the IRS 104 to STB 106 download time once set or even while downloading is occurring. That is, once a transmission is set up, some embodiments allow users to further adjustment bandwidth based on a change to the required time period to complete the transmission.

For example, suppose a user wanted to record a tennis match that occurs during the day, say from 10 AM to 11 AM, while he is at work. He expects to return home no earlier than 6 PM and wants to watch the match at 8 PM. He can use the program guide to select the time and channel at which the program is scheduled.

In some embodiments, he can select the number of hours over which the recording could occur. Since he doesn't expect to watch the program until 8 PM, he could choose a maximum of 10 hours. When the program airs, the IRS 104 will begin to receive and record the real-time stream from the head end encoder 102 at 10 AM; the IRS 104 can then stream the program to the STB 106 at less than real-time, such that the recording is completed no later than at the time corresponding to the number of hours selected.

In other embodiments, the user can simply select the completion time. In this example, the completion time would be 8 PM. The IRS 104 would select a bit rate such that the recording to the STB 106 is finished no later than the completion time.

In other embodiments, the user could adjust the download by changing the maximum duration or end time. For example, if he arrives home at 4:30 and wants to watch sooner, he could adjust the end time to, say, 7 PM. The download can then be "speeded up." Alternatively, he could adjust it to a later time, thereby "slowing down" the download.

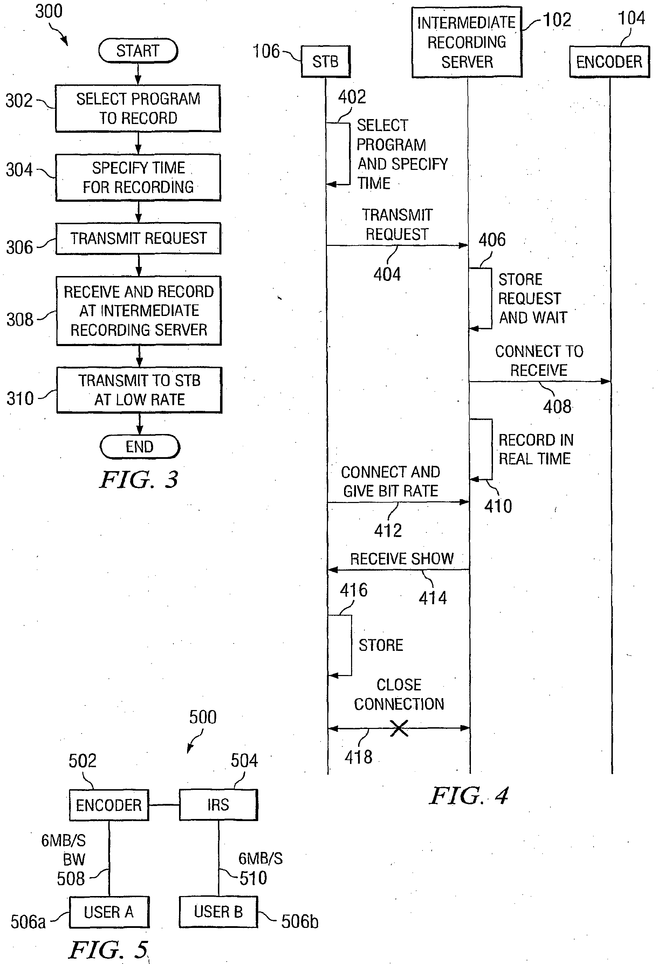

Turning now to FIG. 3, a flowchart 300 illustrating operation of embodiment of the present invention is shown. The particular arrangement of elements in the flowchart 300 is not meant to imply a fixed order to the elements; embodiments can be practiced in any order that is practicable.

Initially, in a process step 302, a viewer can select a program to record, for example, using a user interface similar to that shown in FIG. 2. As discussed above, this can include selecting a program from a program listing, which automatically includes date , time, and channel information. In some embodiments, it can include manually entering a date, program channel, and start and end times.

In a process step 304, the viewer can specify either a time over which the recording should occur, or a completion time for recording the program. In a step 306, the viewer can transmit the request to the IRS 104. In a step 308, the IRS 104 receives and holds the request until the scheduled time; and records the program at the scheduled time. In a process step 310, the IRS 104 transmits the program to the requesting STB 106, either over the period selected, or no later than the selected completion time. Again, in some embodiments, the user can adjust an already-set duration or download time.

Operation of an embodiment of the present invention is shown in greater detail in FIG. 4. Shown are an exemplary STB 106, an IRS 102, and a head end encoder (ENC) 104.

At 402, a viewer can use his user interface to specify a program to be recorded and a time of the recording (or a completion time). At 404, the STB 106 transmits the request to the IRS 102. At 406, the IRS 102 stores the request and waits until the time the program is aired, if necessary. At 408, the IRS 102 connects to the ENC 104 to receive the program. At 410, the IRS 102 records the program in real time. At 412, the STB 106 connects to the IRS 102 to receive the program. In 414, the program is transmitted at the specified timing to the STB 102. At 416, the STB 102 stores the program in its content store (not shown). Finally, at 418, the connection is closed when the program has been stored.

Advantages of embodiments of the present invention are seen by way of example in FIG. 5. Shown at 500 are en encoder ENC 502, an IRS 504, a User A 506a which receives content directly from the ENC 502 and a User B 506b that receives content via the IRS 504. The typical bit rate required to render standard definition television (SDTV) is approximately 3 Mb/s (3 megabits per second). If User A 506a has a bandwidth of 6 Mb/s directly to the ENC 502, then he can only record one program while watching another, or record only two at a time. User B, however, could choose to record, for example, a one hour show in standard definition over a six hour period. This would require transmitting from the IRS 102 at total of 10,800 Mb. Over six hours, this corresponds to a rate of 0.5 Mb/s. Thus, subscriber B 506b could concurrently record twelve programs, or six times the number that subscriber A 506a could.

Embodiments of the present invention thus maximize "last mile" bandwidth for IPTV systems for recording content on an STB for viewing at a later time. Bandwidth usage at the user end is limited to provide a greater number of concurrent recordings.

As discussed above, embodiments of the present invention are suited to an internet protocol media distribution system. FIG. 6A depicts a representative environment according to the invention. Central to Fig. 6A is a network with ATM network backbone 600. This ATM network is capable of fiber data rates of OC3, OC12, OC48, OC192 or as is available in the art. A plurality of content providers place information onto ATM network 600. Typical sources of content served include broadcast information 602, Internet information 604, telenetwork 606, broadcast content 608, and video 610.

In a representative central plant, a plurality of ATM switches 612 interface with network 600 to receive and distribute data from the various content sources. An IRS 104 in accordance with embodiments of the present invention may be located upnetwork from the end user. Information flows from ATM switches 612 via a plurality of paths 613 to a plurality of DSL modems 614. DSL modems 614 connect via DSL twisted pair lines 618 to a plurality of modems 616 in various subscribers residences or establishments. From a representative modem 616, there can be attached a telephone 617 and/or a television set 108 which may include and associated set top box 106, and/or a computer 624. The PVR of embodiments of the present invention may thus be operable on or in association with devices such as telephone 620, television with set top box 106, and/or computer 624.

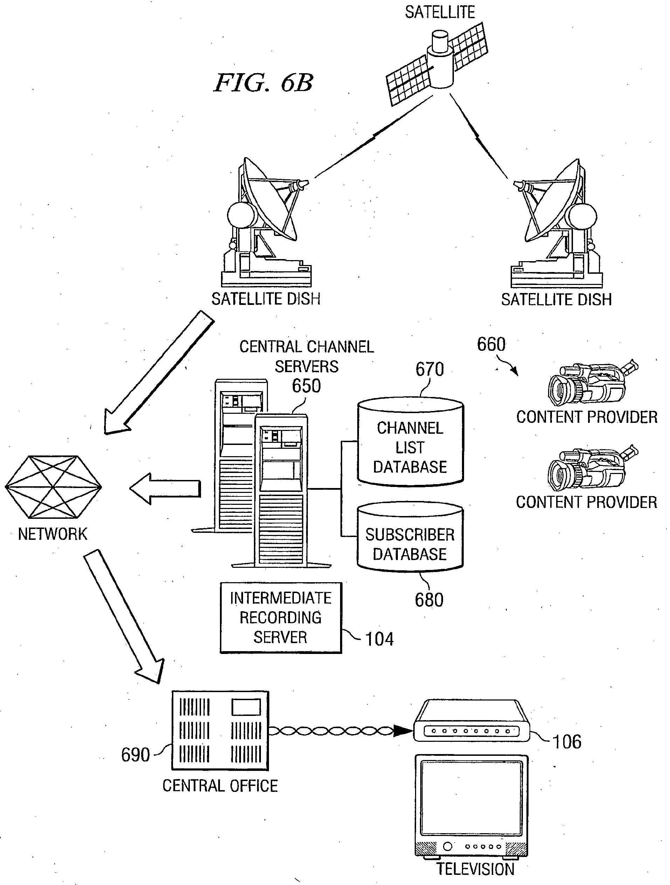

FIG. 6B depicts an overview of a digital programming content distribution system according to a particular embodiment of the present invention. One or more central channel server(s) 680, which may implement the head end encoder(s) described herein, collect(s) information about available programming services distributed from a multiplicity of content providers 660. In a preferable embodiment, this information is multicast by the content providers. Channel server 680 maintains a channel list database 670 which tracks available content channel offerings and a subscriber database 680, which contains subscriber identifications and permitted channels for each subscriber. Subscribers interact with central channel server 680 to obtain programming content information, and with content providers 660 to obtain programs. The IRS 104 may be implemented as part of or in conjunction with the central channel servers 650. Alternatively, the IRS 104 may be implemented in conjunction with the central office 690. In related embodiments, the channel server 680 and content providers 660 may be co-located on the same machine, or may reside on separate machines.

In a representative embodiment, the invention may be practiced using a control system with the basic subsystems and functions depicted in FIG. 7A. In particular, the control unit of FIG. 7A represents, for example, a set top box 106 or an intermediate recording server 104.

In the representative system of FIG. 7A, a control unit 10 includes bus 12, which is shown schematically as a single bus, but can also be a number of buses such as a local bus and one or more expansion buses (e.g., ADB, SCSI, ISA, EISA, MCA, NuBus, or PCI), which interconnect subsystems such as a central processor 14, which may be an 80x89, 98xxx, RISC, Pentium family, or other suitable microprocessor family, system memory 19, which may be RAM, ROM, or a combination thereof, input/output (I/O) controller 18, an external device such as a serial port 28, such as a USB port, and parallel port 32, detachable keyboard 30, mouse 29, fixed disk drive 32, which may be a hard disk drive or an optical drive or a CD-ROM or DVD-ROM drive or other suitable medium; and a floppy disk drive 33 operative to receive a floppy disk.

Network connections are usually established through one or more network adapters 44 attached to one of the buses or a modem on a serial port. Network adapters may include 10 Base T, 100 Base T, optical, ATM, DSL, or other network formats.

MPEG decoder 39 and audio subsystem 42 coupled via bus 12 provide multimedia capability. Many other devices can be connected such as fax 38 connected via serial port 28, touch screen 40 connected directly, infrared peripheral support 34 or printer 20, connected through parallel port 22. Other devices or subsystems (not shown) may be connected in a similar manner. Also, it is not necessary for all of the devices shown in FIG. 7A to be present to practice the invention. The devices and subsystems may be interconnected in different ways from that shown in FIG. 7A without impairing the operation of the system. Source code to implement processing functions in accordance with the present invention may be operably disposed in system memory 16 or stored on storage media such as fixed disk 32 or floppy disk 33.

Video interface 33 may be any standard video format, such as S-video. Various forms of user input devices may be used with the set top box and/or IRS. For example, a touch screen allows a user to point to objects on the screen to select the object and to move the selected object by pointing to a second position on the screen. Alternatively, an infrared or other coupled handheld control unit may be interfaced with the STB or IRS allowing the user to interact with the unit, make changes, and indicate preferences. Various buttons and controls may be displayed on the screen for activation by using the mouse, touch screen, or a remote control via infrared IF 34.

Operatively disposed in memory 19, or resident on fixed disk 32, operating system software may be PSOS, DOS, UNIX, WINDOWS95, WINDOWS CE, WINDOWS XP, or other operating systems known in the art. Executing concurrently and cooperatively with operating system software 710 (FIG. 7B), IP Multicast capable TCP/IP software 712 manages the flow of information into and out of the control unit over the network interface 44. A JAVA enabled Internet browser 714, such as Netscape Navigator Microsoft Explorer or their equivalent in the art provide a web-browser user interface to networked resources through TCP/IP software 712.

Client control code 719 implements functions specific to the set top box or IRS operation, such as the processes depicted herein. Output is provided by user interface 918 in conjunction with Video Interface Code 720. Other clients 722 such as Email, facsimile, video conferencing applications or voice mail may also be supported. In a related embodiment, the functions of the set top unit are integrated into a television, forming an Internet capable, interactive "Smart Television." In a related embodiment, the functions of the set top unit are integrated into a personal computer, forming an Internet: capable, interactive "Workstation Television."

## Claims

1. A method, comprising the steps:
selecting a television program to record at a user device (106) by selecting a time and a channel at which the television program is scheduled for transmission;
receiving a bit stream corresponding to the television program at a first bit rate at a server (104); and
streaming a bit stream corresponding to the television program from the server (104) to the user device (106) at a second bit rate less than the first bit rate, **characterized by**
selecting one of a completion time at which recording should be finished and a time period over which the recording may be made wherein by selecting the time period the completion time is determined as a later time which is by the selected time period later than the time and
streaming of the television program from the server (104) to said user device (106) occurs at less than real-time, such that the recording is completed no later than the completion time.

2. A method in accordance with claim 1, **characterized in that** said first bit rate corresponds to a real time bit rate.

3. A method in accordance with claim 1 or 2, **characterized in that** said second bit rate is a bit rate less than required for viewing the television program in real time and said user device (106) is embodied as a set top box.

4. A method in accordance with any of claims 1 to 3, further comprising adjusting an already-set time period.

5. A method in accordance with any of claims 1 to 4, further comprising
selecting said second bit rate such that the recording to said user device (106) is finished no later than the completion time.

6. A system for recording a television program on a user device (106), comprising:
a head-end encoder (102) configured to stream the television program to an intermediate server (104) operably coupled to the head-end encoder (102) at a first bit rate, wherein a time and a channel is specified at which the television program is scheduled for transmission; and
the user device (106) operably coupled to said intermediate server (104);
wherein the intermediate server (104) is configured to selectively stream the television program to the user device (106) at less than the first bit rate, **characterized in that**
said user device (106) is configured to select one of a completion time at which recording should be finished and a time period over which to receive the television program from said intermediate server (104) wherein by selecting the time period the completion time is determined as a later time which is by the selected time period later than the time and wherein
said intermediate server (104) is adapted to stream the television program to said user device (106) at less than real-time, such that the recording is completed no later than the completion time.

7. A system in accordance with claim 6, **characterized in that** said first bit rate is real time and said second bit rate is less than real time and corresponds to the selected time period.

8. A system in accordance with claim 6 or 7, **characterized in that** said user device (106) comprises an Internet Protocol Television (IPTV) set top box.

9. A system in accordance with any of claims 6 to 8, **characterized in that** the time period is a duration over which to receive the television program from the intermediate server (104).

10. A system in accordance with any of claims 6 to 9, **characterized in that** the time period includes the completion time by which the television program is received from the intermediate server (104).

11. A system in accordance with any of claims 6 to 10, **characterized in that** the time period is user-adjustable once set.

12. A program product stored on one or more computer readable devices, the program product comprising:
code executable to cause selecting a television program to record at a user device (106) by selection of a time and a channel at which the television program is scheduled to be transmitted;
code executable to cause receiving a bit stream corresponding to the television program at a first bit rate at a server (104); and
code executable to cause streaming a bit stream corresponding to the television program from said server (104) to the user device (106) at a second bit rate less than the first bit rate, **characterized by**
code executable to cause selecting one of a completion time at which recording should be finished and a time period over which the recording may be made wherein by selecting the time period the completion time is determined as a later time which is by the time period later than the time and
code executable to cause the streaming of the television program from the server (104) to said user device (106) at less than real-time, such that the recording is completed no later than at the completion time.

13. A program product in accordance with claim 12, **characterized in that** said first bit rate corresponds to a real time bit rate.

14. A program product in accordance with claim 12 or 13, **characterized in that** said second bit rate is a bit rate less than required for viewing the television program in real time.

15. A system for recording a television program on at least one of a plurality of set top boxes, comprising:
a television source (102) configured to stream the television program at a first bit rate;
a server (104) configured to receive a first stream at said first bit rate corresponding to the television program from the television source (102); and
the plurality of the set top boxes coupled to said server (104), the at least one of the plurality of the set top boxes configured to receive a second stream at a second bit rate from said server (104) over a specified time period , said second bit rate being less than said first bit rate,
wherein said server (104) is adapted to stream the television program to said at least one of the plurality of the set top boxes at less than real-time, such that the recording is completed no later than a completion time wherein the completion time is by the specified time period later than a time at which the television program is scheduled for transmission.

16. A system in accordance with claim 15, wherein said first bit rate is a real time bit rate.

17. A system in accordance with claim 15 or 16, wherein said second bit rate is a bit rate less than needed to view the television program in real time.

## Patentansprüche

1. Verfahren, umfassend die folgenden Schritte:
Auswählen eines Fernsehprogramms zur Aufzeichnung an einer Benutzervorrichtung (106) durch Auswählen einer Zeit und eines Kanals, zu der bzw. auf dem die Übertragung des Fernsehprogramms geplant ist;
Empfangen eines Bitstroms, der dem Fernsehprogramm entspricht, bei einer ersten Bitrate an einem Server (104); und
Streamen eines Bitstroms, der dem Fernsehprogramm entspricht, bei einer zweiten Bitrate, die niedriger als die erste Bitrate ist, vom Server (104) zur Benutzervorrichtung (106), **gekennzeichnet durch**
Auswählen einer von einer Beendigungszeit, zu welcher die Aufzeichnung fertig sein sollte, und einer Zeitdauer, über welche die Aufzeichnung durchgeführt werden kann, wobei durch Auswählen der Zeitdauer die Beendigungszeit als eine spätere Zeit bestimmt wird, die um die ausgewählte Zeitdauer später als die Zeit ist, und
wobei das Streamen des Fernsehprogramms vom Server (104) zur Benutzervorrichtung (106) in weniger als Echtzeit erfolgt, derart dass die Aufzeichnung nicht später als die Beendigungszeit endet.

2. Verfahren nach Anspruch 1, **dadurch gekennzeichnet, dass** die erste Bitrate einer Echtzeitbitrate entspricht.

3. Verfahren nach Anspruch 1 oder 2, **dadurch gekennzeichnet, dass** die zweite Bitrate eine Bitrate ist, die niedriger als zum Anzeigen des Fernsehprogramms in Echtzeit erforderlich ist, und die Benutzervorrichtung (106) als eine Set-Top-Box realisiert ist.

4. Verfahren nach einem der Ansprüche 1 bis 3, ferner umfassend ein Anpassen einer bereits eingestellten Zeitdauer.

5. Verfahren nach einem der Ansprüche 1 bis 4, ferner umfassend:
derartiges Auswählen der zweiten Bitrate, dass die Aufzeichnung für die Benutzereinrichtung (106) nicht später als die Beendigungszeit endet.

6. System zum Aufzeichnen eines Fernsehprogramms auf einer Benutzervorrichtung (106), umfassend:
einen Empfangsstellen-Codierer (102), der so konfiguriert ist, dass er das Fernsehprogramm bei einer ersten Bitrate zu einem Zwischenserver (104) streamt, der funktionell mit dem Empfangsstellen-Codierer (102) gekoppelt ist, wobei eine Zeit und ein Kanal spezifiziert sind, zu der bzw. auf dem die Übertragung des Fernsehprogramms geplant ist; und
die Benutzervorrichtung (106), die funktionell mit dem Zwischenserver (104) gekoppelt ist;
wobei der Zwischenserver (104) so konfiguriert ist, dass er das Fernsehprogramm bei weniger als der ersten Bitrate selektiv zur Benutzervorrichtung (106) streamt, **dadurch gekennzeichnet, dass**
die Benutzervorrichtung (106) so konfiguriert ist, dass sie eine von einer Beendigungszeit, zu welcher die Aufzeichnung fertig sein sollte, und einer Zeitdauer auswählt, über welche das Fernsehprogramm vom Zwischenserver (104) empfangen werden soll, wobei durch Auswählen der Zeitdauer die Beendigungszeit als eine spätere Zeit bestimmt wird, die um die ausgewählte Zeitdauer später als die Zeit ist, und wobei
der Zwischenserver (104) so ausgelegt ist, dass er das Fernsehprogramm in weniger als Echtzeit zur Benutzervorrichtung (106) streamt, derart dass die Aufzeichnung nicht später als die Beendigungszeit endet.

7. System nach Anspruch 6, **dadurch gekennzeichnet, dass** die erste Bitrate Echtzeit ist, und die zweite Bitrate weniger als Echtzeit ist und der ausgewählten Zeitdauer entspricht.

8. System nach Anspruch 6 oder 7, **dadurch gekennzeichnet, dass** die Benutzervorrichtung (106) eine Internetprotokoll-Fernseh (IPTV)-Set-Top-Box umfasst.

9. System nach einem der Ansprüche 6 bis 8, **dadurch gekennzeichnet, dass** die Zeitdauer eine Dauer ist, über welche das Fernsehprogramm vom Zwischenserver (104) empfangen werden soll.

10. System nach einem der Ansprüche 6 bis 9, **dadurch gekennzeichnet, dass** die Zeitdauer die Beendigungszeit umfasst, um welche das Fernsehprogramm vom Zwischenserver (104) empfangen wird.

11. System nach einem der Ansprüche 6 bis 10, **dadurch gekennzeichnet, dass** die Zeitdauer vom Benutzer angepasst werden kann, sobald sie eingestellt ist.

12. Programmprodukt, das auf einer oder mehreren computerlesbaren Vorrichtungen gespeichert ist, wobei das Programmprodukt umfasst:
Code, der zum Bewirken des Auswählens eines Fernsehprogramms zur Aufzeichnung an einer Benutzervorrichtung (106) durch Auswahl einer Zeit und eines Kanals, zu der bzw. auf dem die Übertragung des Fernsehprogramms geplant ist, ausgeführt werden kann;
Code, der zum Bewirken des Empfangens eines Bitstroms, der dem Fernsehprogramm entspricht, bei einer ersten Bitrate an einem Server (104) ausgeführt werden kann; und
Code, der zum Bewirken des Streamens eines Bitstroms, der dem Fernsehprogramm entspricht, bei einer zweiten Bitrate, die niedriger als die erste Bitrate ist, vom Server (104) zur Benutzervorrichtung (106) ausgeführt werden kann, **gekennzeichnet durch**
Code, der zum Bewirken des Auswählens einer von einer Beendigungszeit, zu welcher die Aufzeichnung fertig sein sollte, und einer Zeitdauer, über welche die Aufzeichnung durchgeführt werden kann, ausgeführt werden kann, wobei durch Auswählen der Zeitdauer die Beendigungszeit als eine spätere Zeit bestimmt wird, die um die Zeitdauer später als die Zeit ist, und
Code, der zum Bewirken des Streamens des Fernsehprogramms vom Server (104) zur Benutzervorrichtung (106) in weniger als Echtzeit, derart dass die Aufzeichnung nicht später als die Beendigungszeit endet, ausgeführt werden kann.

13. Programmprodukt nach Anspruch 12, **dadurch gekennzeichnet, dass** die erste Bitrate einer Echtzeitbitrate entspricht.

14. Programmprodukt nach Anspruch 12 oder 13, **dadurch gekennzeichnet, dass** die zweite Bitrate eine Bitrate ist, die niedriger als zum Anzeigen des Fernsehprogramms in Echtzeit erforderlich ist.

15. System um Aufzeichnen eines Fernsehprogramms auf mindestens einer von einer Mehrzahl von Set-Top-Boxen, umfassend:
eine Fernsehquelle (102), die so konfiguriert ist, dass sie das Fernsehprogramm bei einer ersten Bitrate streamt;
einen Server (104), der so konfiguriert ist, dass er einen ersten Strom, der dem Fernsehprogramm entspricht, bei der ersten Bitrate von der Fernsehquelle (102) empfängt; und
die Mehrzahl der Set-Top-Boxen, die mit dem Server (104) gekoppelt ist, wobei die mindestens eine der Mehrzahl von Set-Top-Boxen so konfiguriert ist, dass sie einen zweiten Strom bei einer zweiten Bitrate vom Server (104) über eine spezifizierte Zeitdauer empfängt, wobei die zweite Bitrate niedriger als die erste Bitrate ist,
wobei der Server (104) so ausgelegt ist, dass er das Fernsehprogramm in weniger als Echtzeit zu der mindestens einen der Mehrzahl von Set-Top-Boxen streamt, derart dass die Aufzeichnung nicht später als eine Beendigungszeit endet, wobei die Beendigungszeit um die spezifizierte Zeitdauer später als eine Zeit ist, zu welcher die Übertragung des Fernsehprogramms geplant ist.

16. System nach Anspruch 15, wobei die erste Bitrate eine Echtzeitbitrate ist.

17. System nach Anspruch 15 oder 16, wobei die zweite Bitrate eine Bitrate ist, die niedriger als zum Anzeigen des Fernsehprogramms in Echtzeit erforderlich ist.

## Revendications

1. Un procédé, comprenant les étapes suivantes :
la sélection d'un programme de télévision à enregistrer sur un dispositif utilisateur (106) par la sélection d'une heure à laquelle et d'un canal sur lequel le programme de télévision est programmé pour transmission,
la réception d'un flux binaire correspondant au programme de télévision à un premier débit binaire au niveau d'un serveur (104), et
la diffusion en continu d'un flux binaire correspondant au programme de télévision à partir du serveur (104) vers le dispositif utilisateur (106) à un deuxième débit binaire inférieur au premier débit binaire, **caractérisé par**
la sélection d'un élément parmi une heure d'achèvement à laquelle l'enregistrement doit se terminer et une période temporelle pendant laquelle l'enregistrement peut être effectué où, par la sélection de la période temporelle, l'heure d'achèvement est déterminée être une heure ultérieure à la période temporelle sélectionnée, et
la diffusion en continu du programme de télévision à partir du serveur (104) vers ledit dispositif utilisateur (106) se déroule à moins que le temps réel, de sorte que l'enregistrement soit achevé pas plus tard que l'heure d'achèvement.

2. Un procédé selon la revendication 1, **caractérisé en ce que** ledit premier débit binaire correspond à un débit binaire en temps réel.

3. Un procédé selon la revendication 1 ou 2, **caractérisé en ce que** ledit deuxième débit binaire est un débit binaire inférieur à celui nécessaire pour le visionnage du programme de télévision en temps réel et ledit dispositif utilisateur (106) est incorporé sous la forme d'un décodeur.

4. Un procédé selon l'une quelconque des revendications 1 à 3, comprenant en outre l'ajustement d'une période temporelle déjà définie.

5. Un procédé selon l'une quelconque des revendications 1 à 4, comprenant en outre
la sélection dudit deuxième débit binaire de sorte que l'enregistrement vers ledit dispositif utilisateur (106) soit terminé pas plus tard que l'heure d'achèvement.

6. Un système d'enregistrement d'un programme de télévision sur un dispositif utilisateur (106), comprenant :
un codeur de tête de réseau (102) configuré de façon à diffuser en continu le programme de télévision vers un serveur intermédiaire (104) couplé de manière opérationnelle au codeur de tête de réseau (102) à un premier débit binaire, une heure et un canal étant spécifiés auxquels le programme de télévision est programmé pour transmission, et
le dispositif utilisateur (106) est couplé de manière opérationnelle audit serveur intermédiaire (104),
le serveur intermédiaire (104) étant configuré de façon à diffuser en continu de manière sélective le programme de télévision vers le dispositif utilisateur (106) à un débit inférieur au premier débit binaire, **caractérisé en ce que**
ledit dispositif utilisateur (106) est configuré de façon à sélectionner un élément parmi une heure d'achèvement à laquelle l'enregistrement doit se terminer et une période temporelle pendant laquelle recevoir le programme de télévision à partir dudit serveur intermédiaire (104) dans lequel, par la sélection de la période temporelle, l'heure d'achèvement est déterminée être une heure ultérieure à la période temporelle sélectionnée, et dans lequel
ledit serveur intermédiaire (104) est adapté de façon à diffuser en continu le programme de télévision audit dispositif utilisateur (106) à moins que le temps réel, de sorte que l'enregistrement soit achevé pas plus tard que l'heure d'achèvement.

7. Un système selon la revendication 6, **caractérisé en ce que** ledit premier débit binaire est temps réel et ledit deuxième débit binaire est inférieur au temps réel et correspond à la période temporelle sélectionnée.

8. Un système selon la revendication 6 ou 7, **caractérisé en ce que** ledit dispositif utilisateur (106) comprend un décodeur de type télévision par protocole Internet (IPTV).

9. Un système selon l'une quelconque des revendications 6 à 8, **caractérisé en ce que** la période temporelle est d'une durée pendant laquelle il est possible de recevoir le programme de télévision à partir du serveur intermédiaire (104).

10. Un système selon l'une quelconque des revendications 6 à 9, **caractérisé en ce que** la période temporelle comprend l'heure d'achèvement à laquelle le programme de télévision est reçu à partir du serveur intermédiaire (104).

11. Un système selon l'une quelconque des revendications 6 à 10, **caractérisé en ce que** la période temporelle est ajustable par l'utilisateur une fois définie.

12. Un produit de programme conservé en mémoire sur un ou plusieurs dispositifs lisibles par ordinateur, le produit de programme comprenant :
du code exécutable de façon à amener la sélection d'un programme de télévision à enregistrer sur un dispositif utilisateur (106) par la sélection d'une heure et d'un canal auxquels le programme de télévision est programmé pour transmission,
du code exécutable de façon à amener la réception d'un flux binaire correspondant au programme de télévision à un premier débit binaire au niveau d'un serveur (104), et
du code exécutable de façon à amener la diffusion en continu d'un flux binaire correspondant au programme de télévision à partir dudit serveur (104) vers le dispositif utilisateur (106) à un deuxième débit binaire inférieur au premier débit binaire, **caractérisé par**
du code exécutable de façon à amener la sélection d'un élément parmi une heure d'achèvement à laquelle l'enregistrement doit se terminer et une période temporelle pendant laquelle l'enregistrement peut être effectué dans lequel, par la sélection de la période temporelle l'heure d'achèvement est déterminé être une heure ultérieure à la période temporelle sélectionnée, et
du code exécutable de façon à amener la diffusion en continu du programme de télévision à partir du serveur (104) vers ledit dispositif utilisateur (106) à moins que le temps réel, de sorte que l'enregistrement soit achevé pas plus tard qu'à l'heure d'achèvement.

13. Un produit de programme selon la revendication 12, **caractérisé en ce que** ledit premier débit binaire correspond à un débit binaire en temps réel.

14. Un produit de programme selon la revendication 12 ou 13, **caractérisé en ce que** ledit deuxième débit binaire est un débit binaire inférieur à celui nécessaire pour le visionnage du programme de télévision en temps réel.

15. Un système d'enregistrement d'un programme de télévision sur au moins un décodeur d'une pluralité de décodeurs, comprenant :
une source de télévision (102) configurée de façon à diffuser en continu le programme de télévision à un premier débit binaire,
un serveur (104) configuré de façon à recevoir un premier flux audit premier débit binaire correspondant au programme de télévision provenant de la source de télévision (102), et
la pluralité de décodeurs étant couplés audit serveur (104), le au moins un décodeur de la pluralité de décodeurs étant configurés de façon à recevoir un deuxième flux à un deuxième débit binaire à partir dudit serveur (104) pendant une période temporelle spécifiée, ledit deuxième débit binaire étant inférieur audit premier débit binaire, ledit serveur (104) étant adapté de façon à diffuser en continu le programme de télévision vers ledit au moins un décodeur de la pluralité de décodeurs à moins que le temps réel, de sorte que l'enregistrement soit achevé pas plus tard qu'une heure d'achèvement, l'heure d'achèvement étant, par la période temporelle spécifiée, ultérieure à une heure à laquelle le programme de télévision est programmé pour transmission.

16. Un système selon la revendication 15, dans lequel ledit premier débit binaire est un débit binaire en temps réel.

17. Un système selon la revendication 15 ou 16, dans lequel ledit deuxième débit binaire est un débit binaire inférieur à celui nécessaire pour le visionnage du programme de télévision en temps réel.
